**Europäisches Patentamt**

**European Patent Office**

**Office européen des brevets**

(19)

(11) Veröffentlichungsnummer : **0 375 606 B1**

(12) **EUROPÄISCHE PATENTSCHRIFT**

(45) Veröffentlichungstag der Patentschrift :
**28.10.92 Patentblatt 92/44**

(51) Int. Cl.$^5$ : **F16B 13/13**

(21) Anmeldenummer : **89810898.0**

(22) Anmeldetag : **22.11.89**

(54) **Befestigungselement.**

(30) Priorität : **23.12.88 DE 3843391**

(43) Veröffentlichungstag der Anmeldung :
**27.06.90 Patentblatt 90/26**

(45) Bekanntmachung des Hinweises auf die
Patenterteilung :
**28.10.92 Patentblatt 92/44**

(84) Benannte Vertragsstaaten :
**AT BE CH DE ES FR GB IT LI NL SE**

(56) Entgegenhaltungen :
**DE-A- 2 533 162**
**DE-A- 2 650 598**
**DE-A- 2 718 625**
**DE-A- 3 535 262**
**DE-C- 2 849 139**
**US-A- 3 480 306**

(73) Patentinhaber : **HILTI Aktiengesellschaft**
**FL-9494 Schaan (LI)**

(72) Erfinder : **Hachtel, Hans**
**Im Besch 24**
**FL-9494 Schaan (LI)**
Erfinder : **Maier, Michael**
**Rauhenweg 5**
**A-6807 Feldkirch-Tisis (AT)**
Erfinder : **Ehmig, Gerhard**
**Alberweg 1**
**A-6830 Rankweil (AT)**

(74) Vertreter : **Wildi, Roland**
**Hilti Aktiengesellschaft Patentabteilung**
**FL-9494 Schaan (LI)**

EP 0 375 606 B1

Jouve, 18, rue Saint-Denis, 75001 PARIS

## Beschreibung

Die Erfindung betrifft ein Befestigungselement zum Setzen in Beton, Mauerwerk oder dgl. Aufnahmematerialien, mit einer Hülse und einem Bolzen mit Spitze am in Setzrichtung vorderen Ende sowie einem rückwärtig daran anschliessenden Schaft, dessen Länge diejenige der Hülse axial überragt und dessen Aussenkontur wenigstens teilweise der Innenkontur der Hülse entspricht.

Für Befestigungen in harten und spröden Aufnahmematerialien, wie Beton, Mauerwerk und dergleichen, wird heute neben der sogenannten Bohrmontage die sogenannte Direktmontage angewendet. Dabei wird ein nagelartiges Befestigungselement ohne vorzubohren meistens mittels pulverkraftbetriebener Setzgeräte direkt in das Aufnahmematerial eingetrieben. Das Aufnahmematerial im Bereich des eindringenden Befestigungselementes wird dabei verdrängt. Durch das Verdrängen des Aufnahmematerials beim Eintreiben des Befestigungselementes kommt es im Aufnahmematerial zu sehr hohen Druckspannungen, welche an der Oberfläche des Aufnahmematerials zu Ausplatzungen führen können. Solche Ausplatzungen sind nicht nur optisch störend, sondern sie reduzieren auch den Verankerungswert des Befestigungselementes erheblich.

Um solche Ausplatzungen und damit verbundene Ausfälle von Befestigungen zu vermeiden, ist es aus der DE-PS 28 49 139 bekannt, im Aufnahmematerial ein Loch vorzubohren, dessen Durchmesser etwas grösser ist, als der Durchmesser des Schaftes des einzutreibenden Befestigungselementes und dessen Länge mindestens das Doppelte des Durchmessers beträgt. Nach dem Herstellen des Bohrloches wird das Befestigungselement in den Grund des Bohrloches eingetrieben. Die maximalen Druckspannungen werden dadurch von der Oberfläche des Aufnahmematerials weg tiefer in das Aufnahmematerial verlagert. Die geschilderten Ausplatzungen können dadurch vermieden werden. Neben der Verwendung eines separaten Bohrwerkzeuges zum Schaffen eines der Aufnahme des Befestigungselementes dienenden Bohrloches ist es auch bereits bekannt, die Spitze des Besfestigungselementes als Borschneide auszubilden, so dass sich das Befestigungselement selbst ein Bohrloch schaffen kann. Dies ist jedoch sehr aufwendig, da zum Teil teure Massnahmen wie der Einsatz von Hartmetall-Schneidplättchen oder dergleichen erforderlich sind.

Bei einem aus der US-PS 3 480 306 bekannten Verfahren wird eine zylindrische Hülse in ein zuvor erstelltes Bohrloch eingesetzt und anschliessend ein Direktbefestigungselement in die Hülse eingetrieben. Durch das Eintreiben des Direktbefestigungselementes wird die Hülse radial aufgeweitet und im Bohrloch verspreizt. Die Spitze des Direktbefestigungselementes kann dabei noch mehr oder weniger tief in dem Grund des Bohrloches im Aufnahmematrial eindringen. Bei die-sem Verfahren ist Zeitaufwand zum herstellen des Bohrloches relativ hoch.

Zur sogenannten Bohrmontage ist aus der DE-A-2 650 598 ein Befestigungselement, bestehend aus einer Hülse und einem Spreizkörper, bekannt. Zur Herstellung der Bohrung wird der Hülse eine Drehbewegung erteilt, wobei nach Abschluss der Herstellung der Bohrung die Hülse mittels des Spreizkörpers radial aufgeweitet wird. der Spreizkörper dient dabei lediglich der Herstellung der reibschlüssigen Verbindung zwischen Hülse und Wandung der Bohrung.

Ebenfalls zum Gebiet der Bohrmontage ist aus der DE-A-3 535 262 ein weiteres Befestigungselement bekannt, welches innerhalb einer sogenannten hinterschnittenen Bohrung befestigt wird. Zu diesem Zwecke wird mittels eines Bohrwerkzeuges in einem ersten Arbeitsgang eine zylindrische Bohrung hergestellt, welche im Anschluss daran durch das in die Bohrung eingeführte Befestigungselement erweitert wird, indem auf die Hülse eine Drehbewegung einwirkt. Durch das Auflaufen der Hülse auf dem Kegel des Ankerbolzens entsteht eine hinterschnittene Bohrung, in welche die Hülse durch den Kegel radial eingetrieben wird. Der Kegel kommt wiederum mit dem Aufnahmematerial nicht in Kontakt, sondern dient lediglich dem radial Aufweiten der Hülse.

Der Erfindung liegt die Aufgabe zugrunde, ein Befestigungselement zu schaffen, das einfach und wirtschaftlich setzbar ist und gute Verankerungswerte ermöglicht.

Gemäss der Erfindung wird dies dadurch erreicht, dass die Hülse dem Einleiten einer Drehbewegung bzw einer Drehschlagbewegung dienende, mit dem Schaft des Balzens in Verbindung stehende Angriffsflächen aufweist und an ihrem in Setzrichtung vorderen Ende mit einer Bohrschneide versehen ist.

Durch die erfindungsgemässe Ausbildung kann sich die Hülse entsprechend einem sogenannten Selbstbohrdübel ihr Bohrloch im Aufnahmematerial selbst schaffen. Die Bohrschneide trägt dabei das Aufnahmematerial ab. Für eine gute Bohrmehlabfuhr ist es erforderlich, dass die Bohrschneide etwas breiter ist als der Aussendurchmesser der Hülse. Der Drehantrieb der Hülse erfolgt über die Angriffsflächen. Das Setzen des Befestigungselementes erfolgt somit in zwei Schritten. In einem ersten Schritt wird mittels der Hülse ein Bohrloch erzeugt und die Hülse gleichzeitig in das Bohrloch eingeführt. Nach beendigung des Bohrvorganges wird in einem zweiten Schritt der Bolzen vorzugsweise mittels eines pulverkraftbetriebenen Setzgerätes durch die Hülse hindurch in den Grund des erzeugten Bohrloches eingetrieben. Die Verankerung des Bolzens kann dabei einerseits durch Versinterung direkt im Aufnahmematerial selbst und andererseits durch Reib- und Formschluss über die sich durch die radiale Aufweitung im Bohrloch verspreizende Hülse erfolgen.

Die Bohrschneide ist zweckmässigerweise als diametral verlaufende, sich im wesentlichen über den Durchmesser erstreckende Schneidplatte mit zentrischer Spitze ausgebildet. Die Schneidplatte kann dabei einstückig mit der Hülse ausgebildet oder beispielsweise als Hartmetallplättchen in einen Schlitz der Hülse eingelötet werden. Eine als Schneidplatte ausgebildete Bohrschneide zeichnet sich durch eine hohe Bohrleistung, gute Spanabfuhr und eine genaue Bohrlochgeometrie aus. Durch die zentrische Spitze wird der Bohrlochgrund des durch die Hülse erzeugten Bohrloches somit kegelförmig. Ein kegelförmiger Bohrlochgrund ergibt beim anschliessenden Eintreiben des Bolzens eine Zentrierung beim Eindringen der Bolzenspitze in das Aufnahmematerial. Eine Bohrschneide mit einer zentrischen Spitze erleichtert auch das punktgenaue Anbohren des Aufnahmematerials.

Eine weitere zweckmässige Ausführung besteht darin, die Bohrschneide als entlang der vorderen Stirnseite der Hülse verlaufende Bohrkrone mit wenigstens drei Schneidezähnen auszubilden. Eine als Bohrkrone ausgebildete Bohrschneide ist besonders vorteilhaft bei sehr harten, spröden Aufnahmematerialien, wie zB Kiesel hoher Härte enthaltendem Beton. Schneidzähne ergeben eine hohe Oberflächengüte des erzeugten Bohrloches.

Eine weitere zweckmässige Ausführung besteht darin, dass die Angriffsflächen der reibschlüssigen Verbindung mit dem Schaft des Bolzens dienen und eine entlang der Innenkontur der Hülse in Umfangsrichtung verlaufende Erstreckung aufweisen. Ein solcher Reibschluss kann beispielsweise durch entsprechende, einen Press-Sitz erzeugende Passung zwischen der Kontur der Bolzenspitze und der Innenkontur der Hülse zustande kommen. Weiterhin kann der Schaft des Bolzens zum rückwärtigen Ende hin konisch erweiternd ausgebildet werden, so dass zwischen dem Bolzen und der Hülse ein an sich bekannter selbsthemmender Kegelsitz entsteht.

Die Angriffsflächen sind vorteilhaft so angeordnet, dass sie eine von der Umfangsrichtung der Hülse abweichende Erstreckung aufweisen. Solche Angriffsflächen können beispielsweise als paarweise angeordnete, ebene Schlüsselflächen zum Ansetzen eines Gabelschlüssels ausgebildet werden. Bei Verwendung von Spezialschlüsseln können die Angriffsflächen auch eine beliebige polygonale Form aufweisen.

Eine weitere zweckmässige Ausführung besteht darin, dass die Angriffsflächen zur formschlüssigen Verbindung mit dem Schaft des Bolzens an einem von einer Kreisform abweichenden Bereich der Innenkontur der Hülse angeordnet sind. Der Drehantrieb der Hülse erfolgt somit über den Bolzen. Die Angriffsflächen können beispielsweise an Nocken angeordnet sein, welche in Nuten am Schaft des Bolzens formschlüssig eingreifen. Solche Nocken an der Hülse dienen nicht nur der Uebertragung des Drehmomentes, sondern sie können auch der axialen Sicherung der Hülse auf dem Schaft des Bolzens dienen. Die Nocken an der Hülse können beispielsweise nach dem Zusammenfügen der Hülse mit dem Bolzen durch Einprägungen im Bereich der Längsnuten am Schaft des Bolzens hergestellt werden. Werden die Nocken an der Hülse vor dem Zusammensetzen mit dem Bolzen hergestellt, so können die Nocken beim Aufstecken der Hülse auf den Schaft des Bolzens in die Längsnuten einrasten.

Bei einer Verbindung des Bolzens mit der Hülse ist es zweckmässig, dass der Bolzen Drehmitnahmemittel aufweist. Solche Drehmitnahmemittel können beispielsweise als Innen- oder Aussen-Mehrkant ausgebildet werden. Zusammen mit einem entsprechenden Adapter kann auch ein Gewinde der Uebertragung der Drehbewegung dienen.

Die Erfindung soll nachstehend, anhand der sie beispielsweise wiedergebenden Zeichnungen, näher erläutert werden. Es zeigen:

Fig. 1 ein erfindungsgemässes Befestigungselement, teilweise im Schnitt dargestellt,

Fig. 2 einen Querschnitt durch das in Fig. 1 dargestellte Besfestigungselement, entlang der Linie II-II,

Fig. 3 eine Ansicht des in Fig. 1 dargstellten Befestigungselementes, in Richtung des Pfeiles B,

Fig. 4 ein weiteres erfindungsgemässes Befestigungselement, teilweise im Schnitt dargestellt,

Fig. 5 einen Querschnitt durch das in Fig. 4 dargestelle Befestigungselement, entlang der Linie V-V,

Fig. 6 ein weiteres erfindungsgemässes Befestigungselement.

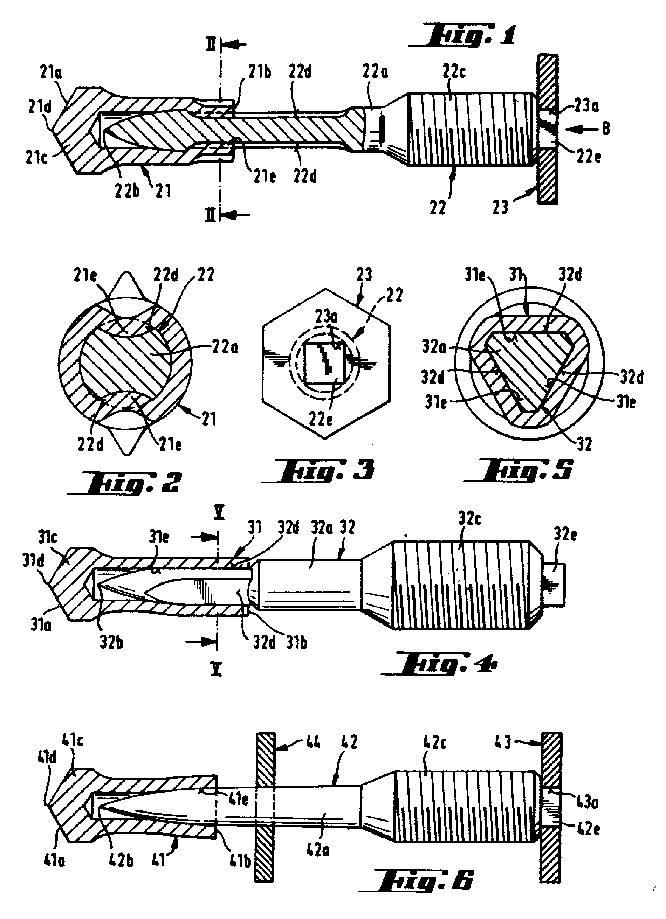

Das aus Fig. 1 bis 3 ersichtliche Befestigungselement besteht aus einer Hülse 21, einen Bolzen 22 und einer Rondell 23. Die Hülse 21 weist ein in Setzrichtung vorderes Ende 21a und ein rückwärtiges Ende 21b auf. Das vordere Ende 21a der Hülse 21 ist als Schneidplatte 21c mit einer zentrischen Spitze 21d ausgebildet. der Bolzen 22 weist einen im wesentlichen zylindrischen Schaft 22a mit einer Spitze 22b auf. Der rückärtige Bereich des Bolzens 22 ist mit einem Gewinde 22c versehen. Der Schaft 22a weist zwei einander diametral gegenüberliegend angeordnet Längsnuten 22d auf. Wie Fig. 2 zeigt, sind die Längsnuten 22d als Hohlkehlen ausgebildet. Die Hülse 21 ist mit zwei in die Längsnuten 22d eingreifenden Vorsprüngen 21e versehen. Die Hülse 21 und der Bolzen 22 sind somit formschlüssig miteinander verbunden. Das rückärtige Ende des Bolzens 22 ist als Vierkant 22e ausgebildet. Wie Fig. 3 zeigt, ist die Rondell 23 in ihrer Aussenkontur sechskantförmig ausgebildet. Eine durchgehende Oeffnung 23a weist die Grösse und form des Vierkants 22e auf. Die Rondell 23 und der Bolzen 22 sind somit ebenfalls formschlüssig miteinander verbunden. der Drehantrieb des Befestigungselementes kann über die Rondell 23 auf den Bolzen 22 und von diesem über die miteinander im Eingriff stehenden Längsnuten 22b und Vorsprünge 21e auf die Hülse 21 übertragen werden.

Fig. 4 und 5 ziegen ein weiteres erfindungsgemässes Befestigungselement. Dieses besteht aus einer Hülse 31 und einem Bolzen 32. Die Hülse 31 weist ein vorderes Ende 31a und ein rückwärtiges Ende 31b auf. das vordere Ende 31a ist als Schneidplatte 31c mit einer zentrischen Bohrspitze 31d ausgebildet. Der Bolzen 32 weist einem im Durchmesser abgesetzten Schaft 32a mit einer Spitze 32b auf. Der rückwärtige Bereich des Bolzens 32 ist als Gewinde 32c ausgebildet. Der vordere, im Durchmesser kleinere Bereich des Schaftes 32a ist mit Anflachungen 32d versehen. Wie der in Fig. 5 dargestellte Querschnitt zeigt, bilden die Anflachungen 32d ein gleichseitiges Dreieck, so dass der Schaft im Bereich der Anflachungen 32d die Form eines Dreikants aufweist. Die Hülse 31 ist entsprechend den Anflachungen 32d mit drei Angriffsflächen 31e versehen. Die Hülse 31 und der Bolzen 32 stehen somit miteinander formschlüssig im Eingriff. Der Drehantrieb der Hülse 31 beim Bohren erfolgt über einen Vierkant 32e am rückwärtigen Ende des Bolzens 32 und wird vom Bolzen 32 über die Anflachungen 32d und die Angriffsflächen 31e auf die Hülse übertragen.

Das aus Fig. 6 ersichtliche Befestigungselement besteht aus einer Hülse 41, einem Bolzen 42 und einer Rondelle 43. Die Hülse 41 weist ein in Setzrichtung vorderes Ende 41a und ein rückwärtiges Ende 41b auf. das vordere Ende 41a der Hülse 41 ist als Schneidplatte 41c mit zentrischer Spitze 41d ausgebildet. Der Bolzen 42 weist einen Schaft 42a mit einer Spitze 42b auf. Der rückwärtige Bereich des Bolzens 42 ist als Gewinde 42c ausgebildet. Die Hülse 41 ist auf den sich zum rückwärtigen Ende konisch erweiternden Schaft 42a des Bolzens 42 aufgepresst. Die Drehmitnahme der Hülse 41 erfolgt rein reibschlüssig über Angriffsflächen 41e im Innern der Hülse 41. Durch die konische Ausbildung des Schaftes 42 wird gewährleistet, das diese reibschlüssige Verbindung während des ganzen Bohrvorganges erhalten bleibt. Zur Führung des Befestigungselementes ist auf dem Schaft 42a eine zusätzliche Führungsrondelle 44 angeordnet. Das rückwärtige Ende des Bolzens 42 ist als Vierkant 42e ausgebildet und wird von der eine entsprechende Oeffnung 43a aufweisenden Rondelle 43 umgeben. Die Rondelle 43 dient dem Drehantrieb des Befestigungselementes beim Bohren eines Loches zur Aufnahme der Hülse 41.

Das aus Fig. 7 bis 9 ersichtliche Befestigungselement besteht aus einer Hülse 21, einem Bolzen 22 und einer Rondelle 23. Die Hülse 21 weist ein in Setzrichtung vorderes Ende 21a und ein rückwärtiges Ende 21b auf. Das vordere Ende 21a der Hülse 21 ist als Schneidplatte 21c mit einer zentrischen Spitze 21d ausgebildet. Der Bolzen 22 weist einen im wesentlichen zylindrischen Schaft 22a mit einer Spitze 22b auf. Der rückwärtige Bereich des Bolzens 22 ist mit einem Gewinde 22c versehen. Der Schaft 22a weist zwei einander diametral gegenüberliegend angeordnete Längsnuten 22d auf. Wie Fig. 8 zeigt, sind die Längsnuten 22d als Hohlkehlen ausgebildet. Die Hülse 21 ist mit zwei in die Längsnuten 22d eingreifenden Vorsprüngen 21e versehen. Die Hülse 21 und der Bolzen 22 sind somit formschlüssig miteinander verbunden. Das rückwärtige Ende des Bolzens 22 ist als Vierkant 22e ausgebildet. Wie Fig. 9 zeigt, ist die Rondelle 23 in ihrer Aussenkontur sechskantförmig ausgebildet. Eine durchgehende Oeffnung 23a weist die Grösse und Form des Vierkants 22e auf. Die Rondelle 23 und der Bolzen 22 sind somit ebenfalls formschlüssig miteinander verbunden. Der Drehantrieb des Befestigungselementes kann über die Rondelle 23 auf den Bolzen 22 und von diesem über die miteinander im Eingriff stehenden Längsnuten 22b und Vorsprünge 21e auf die Hülse 21 übertragen werden.

Fig. 10 und 11 zeigen ein weiteres erfindungsgemässes Befestigungselement. Dieses besteht aus einer Hülse 31 und einem Bolzen 32. Die Hülse 31 weist ein vorderes Ende 31a und ein rückwärtiges Ende 31b auf. Das vordere Ende 31a ist als Schneidplatte 31c mit einer zentrischen Bohrspitze 31d ausgebildet. Der Bolzen 32 weist einen im Durchmesser abgesetzten Schaft 32a mit einer Spitze 32b auf. Der rückwärtige Bereich des Bolzens 32 ist als Gewinde 32c ausgebildet. Der vordere, im Durchmesser kleinere Bereich des Schaftes 32a ist mit Anflachungen 32d versehen. Wie der in Fig. 11 dargestellte Querschnitt zeigt, bilden die Anflachungen 32d ein gleichseitiges Dreieck, so dass der Schaft im Bereich der Anflachungen 32d die Form eines Dreikants aufweist. Die Hülse 31 ist entsprechend den Anflachungen 32d mit drei Angriffsflächen 31e versehen. Die Hülse 31 und der Bolzen 32 stehen somit miteinander formschlüssig im Eingriff. Der Drehantrieb der Hülse 31 beim Bohren erfolgt über einen Vierkant 32e am rückwärtigen Ende des Bolzens 32 und wird vom Bolzen 32 über die Anflachungen 32d und die Angriffsflächen 31e auf die Hülse 31 übertragen.

Das aus Fig. 12 ersichtliche Befestigungselement besteht aus einer Hülse 41, einem Bolzen 42 und einer Rondelle 43. Die Hülse 41 weist ein in Setzrichtung vorderes Ende 41a und ein rückwärtiges Ende 41b auf. Das vordere Ende 41a der Hülse 41 ist als Schneidplatte 41c mit zentrischer Spitze 41d ausgebildet. Der Bolzen 42 weist einen Schaft 42a mit einer Spitze 42b auf. Der rückwärtige Bereich des Bolzens 42 ist als Gewinde 42c ausgebildet. Die Hülse 41 ist auf den sich zum rückwärtigen Ende konisch erweiternden Schaft 42a des Bolzens 42 aufgepresst. Die Drehmitnahme der Hülse 41 erfolgt rein reibschlüssig über Angriffsflächen 41e im Innern der Hülse 41. Durch die konische Ausbildung des Schaftes 42 wird gewährleistet, dass diese reibschlüssige Verbindung während des ganzen Bohrvorganges erhalten bleibt. Zur Führung des Befestigungselementes ist auf dem Schaft 42a eine zusätzliche Führungsrondelle 44 angeordnet. Das rückwärtige Ende des Bolzens 42 ist entsprechend der in Fig. 1 dargestellten Ausführung als Vierkant 42e ausgebildet und wird von der eine entsprechende Oeffnung 43a aufweisenden Rondelle 43 umgeben. Die Rondelle 43 dient dem Drehantrieb des Befestigungselementes beim Bohren eines Loches zur Aufnahme der Hülse 41.

**Patentansprüche**

1. Befestigungselement zum Setzen in Beton, Mauewerk oder dergleichen Aufnahmematerialien, mit einer Hülse (21, 31, 41) und einem Bolzen (22, 32, 42) mit Spitze (22b, 32b, 42b) am in Setzrichtung vorderen Ende, sowie einem rückwärtig daran anschliessenden Schaft (22a, 32a, 42a), dessen Länge diejenige der Hülse (21, 31, 41) axial überragt und dessen Aussenkontur wenigstens teilweise der Innenkontur der Hülse (21, 31, 41) entspricht, **dadurch gekennzeichnet,** dass die Hülse (21, 31, 41) dem Einleiten einer Drehbewegung dienende, mit dem Schaft (22a, 32a, 42a) des Bolzens (22, 32, 42) in Verbindung stehende Angriffsflächen (21e, 31e, 41e) aufweist und dass die Hülse (21, 31, 41) an ihrem in Setzrichtung vorderen Ende (21a, 31a, 41a) mit einer Bohrschneide versehen ist.

2. Befestigungselement nach Anspruch 1, dadurch gekennzeichnet, dass die Bohrschneide als diametral verlaufende, sich im wesentlichen über den Durchmesser erstreckende Schneidplatte (21c, 31c, 41c) mit zentrischer Spitze (21d, 31d, 41d) ausgebildet ist.

3. Befestigungselement nach Anspruch 1, dadurch gekennzeichnet, dass die Bohrschneide als entlang der vorderen Stirnseite der Hülse (21, 31, 41) verlaufende Bohrkrone mit wenigstens drei Schneidzähnen ausgebildet ist.

4. Befestigungselement nach einem der Ansprüche 1 bis 3, dadurch gekennzeichnet, dass die Angriffsflächen (41e) der reibschlüssigen Verbindung mit dem Schaft (42a) des Bolzens dienen und eine entlang der Innenkontur der Hülse (41) in Umfangsrichtung verlaufende Erstreckung aufweisen.

5. Befestigungselement nach einem der Ansprüche 1 bis 3, dadurch gekennzeichnet, dass die Angriffsflächen (21e, 31e) eine von der Umfangsrichtung der Hülse (21, 31) abweichende Erstreckung aufweisen.

6. Befestigungselement nach Anspruch 5, dadurch gekennzeichnet, dass die Angriffsflächen (21e, 31e) zur formschlüssigen Verbindung mit dem Schaft (22a, 32a) des Bolzens (22, 32) an einem von einer Kreisform abweichenden Bereich der Innenkontur der Hülse (21, 31) angeordnet sind.

7. Befestigungselement nach einem der Ansprüche 1 bis 6, dadurch gekennzeichnet, dass der Bolzen (22, 32, 42) Drehmitnahmemittel (22e, 32e, 42e) zum Aufbringen eines Drehmomentes aufweist.

**Claims**

1: Fastening element for setting into concrete, brickwork or supporting materials of this type, comprising a sleeve (21, 31, 41) and a bolt (22, 32, 42) with a tip (22b, 32b, 42b) at the forward end, as seen in the setting direction, and a rearwardly adjacent shaft (22a, 32a, 42a) the length of which axially extends beyond that of the sleeve (21, 31 ,41), and the outside contour of which at least partially corresponds with the inside contour of the sleeve (21, 31, 41), **characterised in that** the sleeve (21, 31, 41) has engagement surfaces (21e, 31e, 41e), which serve to initiate a rotary movement and which are connected to the shaft (22a, 32a, 42a) of the bolt (22, 32, 42), and that the sleeve (21, 31, 41) is provided with a drilling edge at its forward end (21a, 31a, 41a), as seen in the setting direction.

2: Fastening element according to claim 1, **characerised in that** the drill cutter is a diametrally extending cutting blade (21c, 31c, 41c), which substantially extends over the diameter and has a centre tip (21d, 31d, 41d).

3: Fastening element according to claim 1, **characerised in that** the drilling edge is a drill crown, which extends along the forward end of the sleeve (21, 31, 41) and which has at least three cutting teeth.

4: Fastening element according to one of claims 1 to 3, **characterised in that** the engagement surfaces (41e) serve the a frictionally engaged connection to the shaft (42a) of the bolt, and that they extend peripherally along the inside contour of the sleeve (41).

5: Fastening element according to one of claims 1 to 3, **characterised in that** the engagement surfaces (21e, 31e) deviate in their extend from the peripheral direction of the sleeve (21, 31).

6: Fastening element according to claim 5, **characerised in that** the engagement surfaces (21e, 31e) for positive connection to the shaft (22a, 32a) of the bolt (22, 32) are arranged in an area of the inside contour of the sleeve (21, 31), which area deviates from a circular shape.

7: Fastening element according to one of claims 1 to 6, **characterised in that** the bolt (22, 32, 42) has rotary pickup means (22e, 32e, 42e) for producing a torque.

**Revendications**

1. - Elément de fixation pour l'enfoncement dans du béton, de la maçonnerie ou des matériaux de réception analogues, comprenant une douille (21, 31, 41) et un boulon (22, 32, 42) avec une pointe (22b, 32b, 42b) à l'extrémité antérieure dans la direction de pose, ainsi qu'une tige (22a, 32, 42a) qui y fait suite à l'arrière dont la longueur dépasse axialement celle de la douille (21, 31, 41) et dont le contour extérieur correspond au moins en partie au contour intérieur de la douille (21, 31, 41), **caractérisé en ce** que la douille (21, 31, 41) comprend des surfaces d'attaque (21e, 31e, 41e) qui servent à la transmission d'un mouvement de rotation et qui sont en liaison avec la tige (22a, 32a, 42a) du boulon (22, 32, 42), et que la douille (21, 31, 41) est munie à son extrémité (21a, 31a, 41a) antérieure dans la direction de pose, d'une lame d'alésoir.

2. - Elément de fixation selon la revendication 1, caractérisé en ce que la lame d'alésoir est conformée en plaquette de coupe (21c, 31c, 41c) diamétrale avec pointe centrale (21d, 31d, 41d) qui s'étend sensiblement sur le diamètre.

3. - Elément de fixation selon la revendication 1, caractérisé en ce que la lame d'alésoir est conformée en couronne de perçage avec au moins trois dents de coupe qui s'étend le long de la face frontale antérieure de la douille (21, 31, 31).

4. - Elément de fixation selon l'une des revendications 1 à 3, caractérisé en ce que les surfaces d'attaque (41e) servent au couplage par adhérence avec la tige (42a) du boulon et s'étendent dans le sens circonférentiel, le long du contour intérieur de la douille 41.

5. - Elément de fixation selon l'une des revendications 1 à 3, caractérisé en ce que les surfaces d'attaque (21e, 31e) s'étendent le long du contour intérieur de la douille (21, 31) dans une direction qui s'écarte de la direction circonférentielle.

6. - Elément de fixation selon la revendication 5, caractérisé en ce que, pour la liaison à engagement positif avec la tige (22a, 32a) du boulon (22, 32), les surfaces d'attaque (21e, 31e) sont disposées dans une zone du contour intérieur de la douille (21, 31) qui s'écarte de la forme circulaire.

7. - Elément de fixation selon l'une des revendications 1 à 6, caractérisé en ce que le boulon (22, 32, 42) comporte des moyens d'entraînement en rotation (22e, 32e, 42e) pour l'application d'un couple de rotation.

Fig. 1

Fig. 2

Fig. 3

Fig. 5

Fig. 4

Fig. 6

7